# EUROPEAN PATENT APPLICATION

(11) **EP 3 023 008 A1**
(43) Date of publication of application: **25.05.2016**
(21) Application number: 14194561.8
(22) Date of filing: 24.11.2014
(51) Int. Cl.: A01N 59/00, C02F 1/44, C02F 1/461, C01B 11/04, C01B 11/06

(54) **Production of disinfection solutions from seawater with electrolysis**

(71) Applicant: Siemens Aktiengesellschaft, 80333 München (DE)
(72) Inventor: Jakobsen, Christine, 1470 Lørenskog (NO); Mehlen, Mari, 0591 Oslo (NO)

(57) **Abstract**

It is described a method and an apparatus for producing a disinfection solution based on seawater having a certain salt content, wherein the salt content of the seawater is increased to obtain a brine and the disinfection solution is produced from the brine, by means of an electrolysis procedure.

## Description

### Field of invention

The present invention generally relates to the field of disinfection solutions in particular for cleaning off-shore equipment. More particularly the invention relates to a method and an apparatus for producing disinfection solutions based on seawater.

### Art Background

In recent times the number of off-shore applications has increased in economically very important fields, especially regarding wind energy and oil drilling. Such applications comprise a wide range of technical machinery which has to be constantly maintained. Hereby, an important factor is disinfection against various kinds of sea organisms such as bacteria, algae, mussels, barnacles and many more. Without disinfection, applications such as heat exchangers, piping systems and many more, can be blocked or hampered in their proper function by occupation of sea organisms.

An effective way to disinfect water, in particular seawater, is the use of hypochlorite. In order to produce hypochlorite, an electric current is run through salt water, which is termed electrochlorination procedure. The actual chemical process can be described with the following formula:

NaCl + H₂O + energy -> NaOCl + H₂

Hereby, the hydrogen gas has to be removed in a further step. Due to the extreme low obtaining cost of seawater, many companies generally use seawater as the precursor of this electrochlorination procedure.

However, the efficiency of the electrochlorination procedure is low.

### Summary of the Invention

There may be a need for an effective method and an apparatus to produce a disinfection solution in particular for off-shore applications.

This need may be met by the subject matter according to the independent claims.

Advantageous embodiments of the present invention are described by the dependent claims.

According to a first aspect of the invention there is provided a method for producing disinfection solution. The method comprising the steps of providing seawater having a certain salt content, increasing the salt content of the seawater in order to obtain a brine and producing the disinfection solution from the brine, by means of an electrolysis procedure.

According to a further aspect of the invention there is provided an apparatus for producing a disinfection solution from seawater. The apparatus comprises a concentration unit for increasing the salt content of the seawater to obtain a brine. The apparatus comprises further a disinfection solution production unit for producing the disinfection solution from the brine and wherein the disinfection solution production unit comprises an electrolysis unit for performing an electrolysis procedure. Furthermore, the apparatus comprises also an interface unit to transport the brine from the concentration unit to the disinfection solution production unit.

These aspects of the invention are based on the idea that instead of using raw seawater as a source for the production of the disinfecting chemicals, concentrated seawater, i.e. brine, can be used as a source for the production of the disinfecting chemicals. This will increase the efficiency of the electrolyzing unit and higher concentrations of disinfecting chemicals can be produced. With higher concentrations of the produced chemicals, less volume is needed for the disinfecting treatment and the footprint of the electrochlorinator can be reduced.

In addition to reduced environmental footprint, a disinfecting solution with higher concentration has a longer lifetime than the more diluted solution. For that reason it is possible to produce seawater based disinfection solution for storage purposes. Further, in contrast to known devices, the described apparatus can be operated in a continuous manner and will not require a continuous working electrochlorinator.

In other words, a disinfection solution is produced very efficiently in a two-step manner from off-shore seawater with a reduced environmental footprint.

In this document the term "disinfection solution" may refer to any solution that has an effect of killing or stopping the growth of microbes such as bacteria or protozoans, small animals such as mussels and barnacles and plants such as algae. Disinfection works by destroying the cell wall of microbes or interfering with their metabolism. Preferably, the disinfection solution is not harmful, or at least not life threatening for humans in the applied concentrations. High concentrations of the disinfection solution can have a stronger impact than lower concentrations of the disinfection solution. Examples for disinfection solutions are dissolved oxidizing agents such as sodium hypochlorite, calcium hypochlorite, hydrogen peroxide, chlorine dioxide and/or ozone. Further disinfection solutions are for example alcohols, aldehydes, phenols and/or dissolved metals such as silver.

The term "brine" may refer to a solution with a very high salt content. This salt content may be in the range 5 to 50%, in particular 15 to 35%, more particularly 20 to 30%.

An electrolysis procedure refers to a method of using an electric current to drive a chemical reaction, which would normally be non-spontaneous. One example of electrolysis is electrochlorination, wherein sodium chloride reacts with water and energy to sodium hypochlorite and hydrogen gas.

The term "concentration unit" may refer to a device that concentrates the salt content of a solution. In a most basic embodiment, seawater is disposed to sunlight or another heat source and, while the water evaporates, the salt content is increased.

The term "interface unit" may refer to a device that connects an outlet of a concentration unit with an inlet of a disinfection solution production unit. There is a plurality of manners, in which the interface unit can be realized. In a most basic embodiment, the outlet of the concentration unit is directly connected to the disinfection solution unit and may be controllable by a control device, such as a valve. In another embodiment, the interface unit is a device with an inlet and an outlet, which enables to control the flow of the brine which passes through it. For example, parameters such as salt content, temperature or pH could be measured. Also, the interface unit could be used as a filter in order to clean the brine. In another embodiment, the concentration unit and the disinfection solution production unit may be separated by a far distance and the interface unit can be realized as a pipe or even a complex system of pipes.
In other embodiments, the concentration unit and the disinfection solution unit are not connected directly. In such cases the interface unit may be realized by a machine that transports the brine from the outlet of the concentration unit to the inlet of the disinfection solution production unit.

According to a further embodiment of the invention, increasing the salt content of seawater comprises performing a reverse osmosis procedure.

Reverse osmosis is a technique applied in order to purify water, in particular to produce drinking water from seawater by reducing the salt content. For this purpose, a reverse osmosis unit consists of two chambers which are separated by a semi-permeable membrane. When a pressure is applied to the first chamber in which the solute, in particular water, is located, the osmotic pressure will be overcome and the pure solvent, normally water, will penetrate through the membrane into the second chamber. As the membrane is not permeable or less permeable for the salts than for the water, the water that passes through the membrane in the second chamber is thus reduced in its salt content. Yet, a high amount of salt will remain in water that is still in the first chamber of the reverse osmosis unit. This highly salt-concentrated water can be considered as a brine. Different kinds of membranes can be used for reverse osmosis, as will be known by a person skilled in the art.

According to a further embodiment of the invention, the reverse osmosis procedure comprises producing process water having a first concentration of sulfate salt, wherein the first concentration of sulfate salt is smaller than a second concentration of sulfate salt being dissolved in the seawater.

Reverse osmosis can also be applied to remove only sulfate from seawater to make it amenable for the use in oil wells. The water that remains in the first chamber of the reverse osmosis unit with the second concentration of sulfate salt could be considered as a brine and may be amenable to be used for the production of a disinfecting solution.

According to a further embodiment of the invention, the reverse osmosis procedure comprises producing process water having a first concentration of salt, wherein the first concentration of salt is smaller than a second concentration of salt being dissolved in the seawater.

Reverse osmosis can also be applied to remove salts from seawater to make it amenable for the use as drinking water. The water that remains in the first chamber of the reverse osmosis unit with the second concentration of salty could be considered as a brine and may be amenable to be used for the production of a disinfecting solution.

According to a further embodiment of the invention, the reverse osmosis unit procedure comprises two different membranes for increasing the concentration of salt and sulfate salt, respectively.

This may provide the advantage that process water for drinking purposes and for oil drilling purposes can be produced simultaneously, which makes the procedure more versatile and practicable.

According to a further embodiment of the invention, the reverse osmosis unit procedure comprises the same membrane for increasing the concentration of salt and sulfate salt.

This may provide the advantage that the reverse osmosis unit is more compact and the environmental footprint is decreased.

According to a further embodiment of the invention, the method is carried out in an off-shore environment.

The term off-shore environment may particularly refer to a locality which is in a distance, in particular several kilometers, from a shoreline, but still situated above the continental shelf. Thus, an off-shore environment is located in or above the sea. An example for facilities situated in an off-shore environment are wind farms, oil-drilling platforms or even technically operating ships.

According to a further embodiment of the invention, the salt content of the brine is in the range 5 to 50 %.

The concentration of the salt content of the brine is a multitude from the concentration of salt in the seawater, which might be in the range of 0.5-4 %. The salt concentration of the brine may be in the range 5 to 50 %, in particular 10 to 40 %, more particularly 20 to 30 %.

According to a further embodiment of the invention, the salt comprises sodium chlorite.

Sodium chlorite (chemical formula NaCl) is the most abundant salt component in seawater. Therefore, it is most amenable to use mainly sodium chlorite as salt during electrochlorination and accordingly hypochlorite in the disinfection solution. Still, it is possible to use other salts as well, such as potassium chlorite, calcium chlorite or magnesium chlorite.

According to a further embodiment of the invention, the electrolysis process comprises an electrochlorination procedure.

This may provide the advantage that the described method can rely on well-known procedures in the field of water treatment. As a consequence, the method can be performed with available equipment.

Water with salt content is inserted into an electrochlorinator or electrolyzing cell, which may have the form of a channel, in particular a channel with decreasing thickness. In one embodiment, the water may be streaming through the channel, wherein one side of the channel may be a cathode, and the other side may be an anode. A current may be applied to the cathode and anode of the channel, in particular a direct current. This current leads to the production of hypochlorite with the specific counter ion, in particular sodium. Other substances than hydrochlorite might as well be produced using the electrochlorinaton procedure.

According to a further embodiment of the invention, the disinfection solution contains hypochlorite.

This may provide the advantage that hypochlorite is very harmful to small organisms such as bacteria or algae, but not to humans.

Hypochlorite is an ion composed of chlorine and oxygen with the chemical formula ClO⁻. It can combine with a number of counter ions to form hypochlorites, which may also be regarded as the salts of hypochlorous acid. Such counter ions are in particular sodium, potassium and calcium. But other counter ions are also possible. Hypochlorite is especially a strong oxidizing agent, which kills via the oxidation of organic molecules. It is able to disintegrate the lipids that compose the cell wall of microorganisms such as bacteria, protozoans and react with intracellular enzymes and proteins, making them nonfunctional.

It has to be noted that embodiments of the invention have been described with reference to different subject matters. In particular, some embodiments have been described with reference to method type claims whereas other embodiments have been described with reference to an apparatus type claim. However, a person skilled in the art will gather from the above and the following description that, unless other notified, in addition to any combination of features belonging to one type of subject matter also any combination between features relating to different subject matters, in particular between features of the method type claims and features of the apparatus type claim is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows an apparatus for producing a disinfection solution.
Figure 2 shows a method for producing a disinfection solution.

### Detailed Description

The illustration in the drawing is schematically.

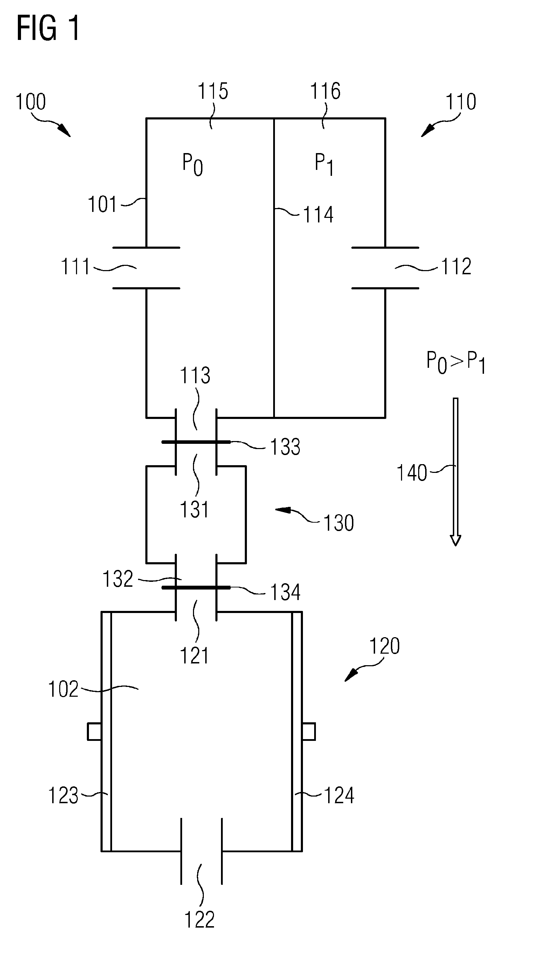

Figure 1 shows an apparatus 100 for producing a disinfection solution from seawater. The apparatus 100 comprises a concentration unit 110 for increasing the salt content of the seawater to obtain a brine. The apparatus 100 further comprises a disinfection solution production unit 120 for producing the disinfection solution from the brine, wherein the disinfection solution production unit 120 comprises an electrolysis unit 102 for performing an electrolysis procedure. Furthermore, the apparatus 100 comprises an interface unit 130 to transport the brine from the concentration unit 110 to the disinfection solution production unit 120.

In a preferred embodiment, seawater with a salt content is introduced through an inlet 111 into a first chamber 115 of a reverse osmosis unit 101. As can be seen from Figure 1, reverse osmosis unit is at least a part of the concentration unit 110. When a pressure P0 is applied to the first chamber 115, the water penetrates a semi-permeable membrane 114 to reach a second chamber 116 of the reverse osmosis unit 101. In the second chamber 116 a pressure P1 is applied, which is lower than P0.

Process water with low salt concentration or no salt content leaves the reverse osmosis unit 101 through a process water outlet 112. This process water can be used as drinking water for example for people working in an off-shore environment or as oil-well water, depending on the applied membrane.

While the salt concentration in the second chamber 116 is very low, the salt concentration in the water in the first chamber 115 is constantly increasing. At a certain salt concentration, for example in the range 20-30 %, the water can be considered as a highly concentrated brine. The brine can leave the reverse osmosis unit 101 through a brine outlet 113. In this exemplary embodiment the brine outlet 113 is shown at the bottom of the reverse osmosis unit. Yet, it should be understood that the brine outlet can be arranged at a variety of different positions of the reverse osmosis unit 101.

In the preferred embodiment described here, an interface unit 130 connects the concentration unit 110 and the disinfection solution production unit 120. In one embodiment, the interface unit 130 can provide a connection between the brine outlet 113 of the reverse osmosis unit 101 and the brine inlet 121 of an electrochlorination unit. As can be seen in Figure 1, the interface unit 130 has an inlet 131 and an outlet 132 for the brine. Additionally the inlet and outlet can be secured or controlled by a control device, such as an inlet valve 133 and an outlet valve 134. There are no limits for the size of the interface unit 130, for example it could be in the form of a pipe and be many meters long. Also, the interface unit 130 could be a machine that transports the brine from brine outlet 131 to brine inlet 121. It is mentioned, that the function of the interface unit 130 can also be realized by a human being who transports the brine from brine outlet 131 to brine inlet 121.

In the preferred embodiment described here, the disinfection solution production unit 120 contains an electrochlorination unit 102. The electrochlorination unit 102 comprises a brine inlet 121 and a disinfection solution outlet 122 downstream of the brine inlet 121. Furthermore, the electrochlorination unit 102 has a first side wall 123 and a second side wall 124, opposite of the first side wall 123, wherein either the first side wall 123 or the second wall 124 is a cathode or and anode, respectively. The brine streams away from the brine inlet 121. As a current is applied to the electrochlorination unit 102, the sodium chlorite of the brine will react and will be turned into sodium hypochlorite. In this manner the brine becomes a disinfection solution which can be extracted from the electrochlorination unit 102 through the disinfection solution outlet 122.

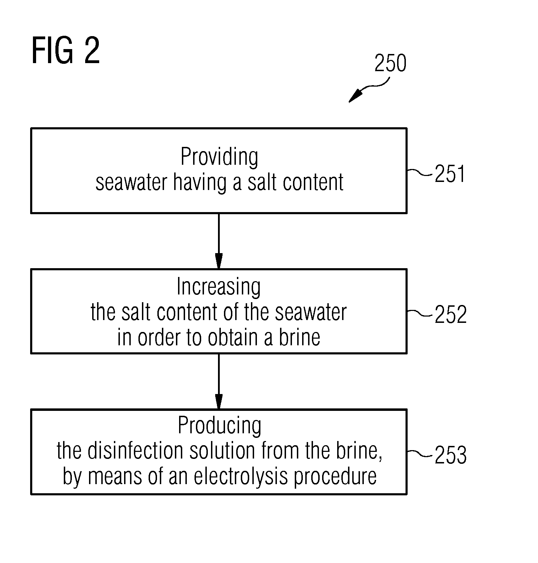

Figure 2 shows a flowchart of a method 250 for producing a disinfection solution from seawater in accordance with an embodiment of the invention. The method comprises providing 251 seawater having a certain concentration of salt from off-shore environments, close-shore environments and/or from different water heights in the sea. The method further comprises increasing 252 the salt content of the seawater in order to obtain a brine. The method further comprises producing 253 the disinfection solution from the brine by means of an electrolysis procedure.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A method for producing a disinfection solution, the method comprising
providing seawater having a certain concentration of salt;
increasing the salt content of the seawater in order to obtain a brine; and
producing the disinfection solution from the brine by means of an electrolysis procedure.

2. The method as set forth in the preceding claim, wherein increasing the salt content of seawater comprises performing a reverse osmosis procedure by means of a reverse osmosis unit.

3. The method as set forth in claim 2, wherein
the reverse osmosis procedure comprises
producing process water having a first concentration of sulfate salt, wherein the first concentration of sulfate salt is smaller than a second concentration of sulfate salt being dissolved in the seawater.

4. The method as set forth in claim 2 or claim 3, wherein the reverse osmosis procedure comprises
producing process water having a first concentration of salt, wherein the first concentration of salt is smaller than a second concentration of salt being dissolved in the seawater.

5. The method as set forth in claims 2 to 4, wherein
the reverse osmosis unit comprises two different membranes for increasing the concentration of salt and sulfate salt, respectively.

6. The method as set forth in claims 2 to 4, wherein the reverse osmosis unit comprises the same membrane for increasing the concentration of salt and sulfate salt.

7. The method as set forth in any one of the preceding claims, wherein the method is carried out in an off-shore environment.

8. The method as set forth in any one of the preceding claims, wherein the salt content of the brine is in the range 5 to 50 %.

9. The method as set forth in any one of the preceding claims, wherein the salt comprises sodium chlorite.

10. The method as set forth in claim 9, wherein the electrolysis process comprises an electrochlorination procedure.

11. The method as set forth in claim 9 or claim 10, wherein the disinfection solution contains hypochlorite.

12. An apparatus for producing a disinfection solution from seawater, in particular for producing a disinfection solution by means of the method as set forth in any one of the claims 1 to 11, the apparatus comprising
a concentration unit for increasing the salt content of the seawater to obtain a brine, and
a disinfection solution production unit for producing the disinfection solution from the brine, wherein the disinfection solution production unit comprises an electrolysis unit for performing an electrolysis procedure, and
an interface unit to transport the brine from the concentration unit to the disinfection solution production unit.
